# EUROPÄISCHE PATENTANMELDUNG

(11) **EP 1 323 487 A2**
(43) Veröffentlichungstag der Anmeldung: **02.07.2003**
(21) Anmeldenummer: 02012774.2
(22) Anmeldetag: 10.06.2002
(51) Int. Cl.: B23D 61/02, B23C 5/08

(54) **Scheibenförmiges Werkzeug, insbesondere Kreissägeblatt**

(30) Priorität: 28.12.2001 DE 20121039 U
(71) Anmelder: AKE Knebel GmbH & Co., 72336 Balingen-Engstlatt (DE)
(72) Erfinder: Knebel, Albert, 72336 Balingen-Engstlatt (DE)
(74) Vertreter: Möbus, Daniela, Dr.-Ing.

(57) **Zusammenfassung**

Ein scheibenförmiges Werkzeug, insbesondere Kreissägeblatt, mit an seinem Umfang angeordneten Schneidezähnen (11, 12, 13), wobei die Schneidezähne (12, 13, 14) in Gruppen (11) unterteilt sind und jeweils der in Schneiderichtung (15) erste Zahn (12) einer Gruppe (11) mit seiner Schneide radial weiter nach außen ragt als der oder die Folgezähne (13, 14) der Gruppe (11).

## Beschreibung

Die Erfindung betrifft ein scheibenförmiges Werkzeug, insbesondere ein Kreissägeblatt, mit an seinem Umfang angeordneten Schneidezähnen.

Beim Sägen insbesondere stark spanender Materialien wie Spanplatten tritt stets das Problem auf, die entstehenden Sägespäne möglichst rasch aus dem Schnittbereich herauszubefördern, um ein Verklemmen des Sägeblatts im Werkstück und/oder ein beeinträchtigtes Schneideergebnis zu verhindern.

Zur Lösung dieses Problems sind Kreissägeblätter mit so genannten Räumschneiden, die seitlich am Sägeblatt angeordnet sind, vorgeschlagen worden. Auch durch eine spezielle Formung der Schneiden wurde versucht, den Spanaustrag zu verbessern. Bei allen bekannten Sägeblättern sind jedoch die Schneidezähne alle gleichmäßig geformt, sodass beim Eingriff jedes Schneidezahns in das Werkstück erneut dieselbe Menge an Spänen anfällt wie beim vorausgehenden Zahn.

Der vorliegenden Erfindung liegt die Aufgabe zugrunde, ein Kreissägeblatt vorzuschlagen, mit dem ein ausreichender Spanaustrag auch beim Bearbeiten stark spanender Werkstücke gewährleistet ist.

Die Aufgabe wird mit einem scheibenförmigen Werkzeug, insbesondere einem Kreissägeblatt, mit an seinem Umfang angeordneten Schneidezähnen erfindungsgemäß dadurch gelöst, dass die Schneidezähne in Gruppen unterteilt sind, wobei jeweils der in Schneiderichtung erste Zahn einer Gruppe mit seiner Schneide radial weiter nach außen ragt als der oder die Folgezähne der Gruppe.

Die ersten Schneidezähne einer Gruppe sind damit diejenigen Schneidezähne, die das Werkstück spanend bearbeiten. Die niedrigeren Folgezähne dienen in erster Linie dem Ausräumen der entstandenen Späne und der Schnittglättung. Es hat sich gezeigt, dass sich durch diese gruppenartige Anordnung von Schneidezähnen sehr viel bessere Schnittergebnisse erzielen lassen, als mit Kreissägeblättern mit einheitlichen Schneidezähnen. Dabei können in einer Gruppe vorzugsweise drei oder mehr Schneidezähne angeordnet sein. Der gegenseitige Abstand der Span bildenden ersten Schneidezähne der Gruppe ist dann groß genug, dass dazwischen die Folgezähne die Späne ausräumen können.

Besonders günstige Ergebnisse konnten bei Versuchen erzielt werden, wenn der erste Schneidezahn einer Gruppe um 0,3 bis 0,8 mm radial über den oder die nachfolgenden Schneidezähne nach außen vorsteht. Bei Gruppen mit mehreren Folgezähnen können diese alle radial gleich weit oder unterschiedlich weit nach außen vorstehen.

Für die Schneidenform der Schneidezähne kommen unterschiedliche Formen in Betracht. Bei einer bevorzugten Ausgestaltung weisen die ersten Schneidezähne einer Gruppe eine im Längsschnitt trapezförmige Schneide mit seitlichen Fasen auf, wobei die Fasen mit der Scheibenebene des Werkzeugs vorzugsweise einen Winkel von 30° bis 60° einschließen können. Je nach Winkel der Fasen und Höhe der Schneiden kann die Breite der Fasen zwischen 1/4 und 3/4 der Schnittbreite des Werkzeugs betragen.

Die Schneiden des oder der Folgezähne können ebenfalls ein- oder beidseitig mit Fasen versehen sein. Auch die Fasen der Folgezähne können dabei vorzugsweise mit der Scheibenebene des Werkzeugs einen Winkel von 30° bis 60° einschließen. Um ein optimales Ausräumen der Späne zu ermöglichen, sollten hierbei jedoch die Breiten der Fasen geringer gewählt werden als bei den ersten Schneidezähnen. Vorzugsweise kann die Breite der Fasen 1/25 bis 1/5 der Schnittbreite des Werkzeugs betragen. Es ist jedoch auch möglich, Folgezähne ohne seitliche Fasen einzusetzen.

Für die Spanwinkel, die Rückenfreiwinkel und Tangentialwinkel der Schneidezähne können die bei Kreissägeblättern üblichen Winkelvorgaben gewählt werden. So kann beispielsweise der Spanwinkel bei allen Schneidezähnen zwischen 5° und 30° betragen. Der Rückenfreiwinkel kann in einem Bereich von 10° bis 20° liegen. Für den Tangentialwinkel der Schneidezähne haben sich Werte zwischen 1° und 7° als vorteilhaft erwiesen. Außerdem können die Schneidezähne einen Radialwinkel von 0° bis 3° aufweisen.

Nachfolgend werden anhand der Zeichnung bevorzugte Ausführungsformen eines erfindungsgemäßen Werkzeugs näher beschrieben.

Es zeigen:
- Fig. 1: einen Ausschnitt eines Kreissägeblatts;
- Fig. 2a, 2b, 2c: Ansichten von vorne auf die Schneidezähne des Kreissägeblatts aus Fig. 1;
- Fig. 3a, 3b: Vorderansichten einer zweiten Ausgestaltungsmöglichkeit von Folgezähnen;
- Fig. 4a, 4b: Vorderansichten einer dritten Ausgestaltungsmöglichkeit von Folgezähnen;
- Fig. 5a, 5b, 5c: verschiedene Ansichten von Schneidezähnen und ihrer Span-, Rückenfrei-, Tangential- und Radialwinkel.

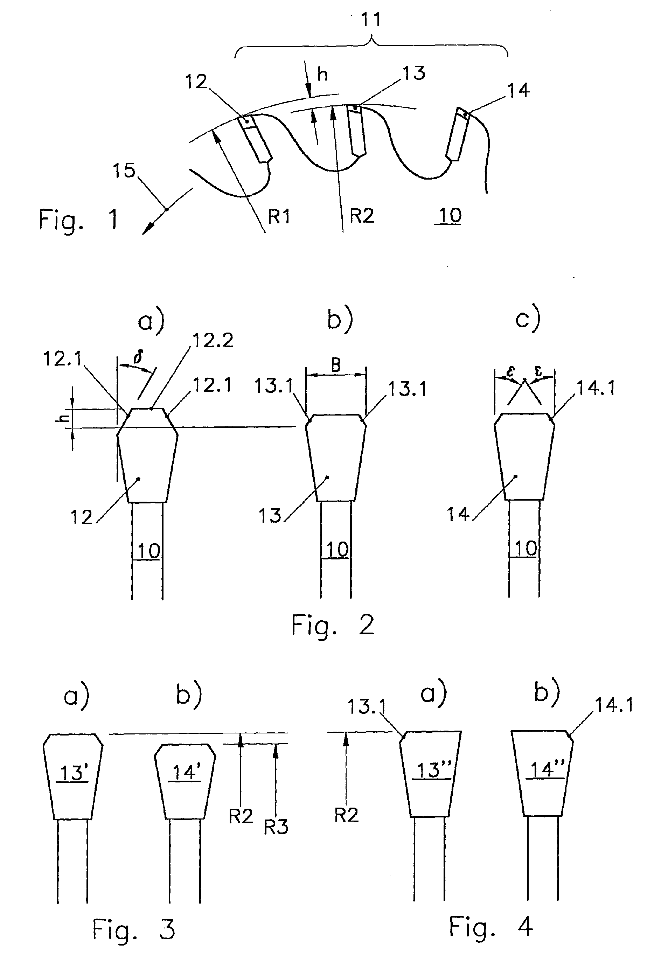

Der in Fig. 1 gezeigte Ausschnitt eines Sägeblatts 10 weist eine Gruppe 11 von drei Schneidezähnen 12, 13, 14 auf. Der erste Schneidezahn 12 in Schneiderichtung 15 des Sägeblatts 10 ragt dabei um den Abstand h radial über die beiden Folgezähne 13, 14 hervor. Somit ist auch der äußere Radius R1, der durch den ersten Schneidezahn 12 definiert wird, um h größer als der Radius R2, der durch die Schneiden der Folgezähne 13, 14 definiert wird.

Wie die Vorderansichten der Zähne 12, 13, 14 in Fig. 2a bis 2c zeigen, ist die Schneidenform des ersten Zahns 12 trapezförmig mit zwei seitlichen Fasen 12.1 ausgebildet. Die Fasen 12.1 schließen dabei mit der Ebene des Kreissägeblatts 10 einen Winkel δ von vorzugsweise 30° bis 60° ein. Der verbleibende gerade Schneidenbereich 12.2 beträgt dann zwischen 1/4 und 3/4 der gesamten Schneidbreite B des Kreissägeblatts 10 (Fig. 2b).

Wie die Fig. 2b und 2c zeigen, sind die beiden Folgezähne 13, 14 identisch ausgebildet. Auch sie weisen seitliche Fasen 13.1, 14.1 auf, die mit mit der Ebene des Kreissägeblatts 10 einen Winkel ∈ von ebenfalls 30° bis 60° einschließen. Die Schneiden 13 und 14 sind jedoch um den Betrag h kürzer als die Schneide 12. Insofern nehmen die Fasen 13.1, 14.1 nur circa 1/25 bis 1/5 der gesamten Breite B des Kreissägeblatts 10 ein.

Die Fig. 3 und 4 zeigen alternative Ausgestaltungsmöglichkeiten 13', 14' bzw. 13'', 14'' der Folgezähne 13, 14. Im Gegensatz zu den Zähnen 13, 14 sind die Zähne 13', 14' gemäß Fig. 3 unterschiedlich lang. Hier ragt der Zahn 13' gegenüber dem Zahn 14' radial nach außen vor.

Bei der Ausgestaltung gemäß Fig. 4 sind die Zähne 13", 14" wieder gleich lang, weisen hier aber jeweils nur einseitig eine Fase 13.1 bzw. 14.1 auf. Selbstverständlich ist auch eine Ausgestaltung der Folgezähne 13, 14 völlig ohne Fasen 13.1, 14.1 möglich.

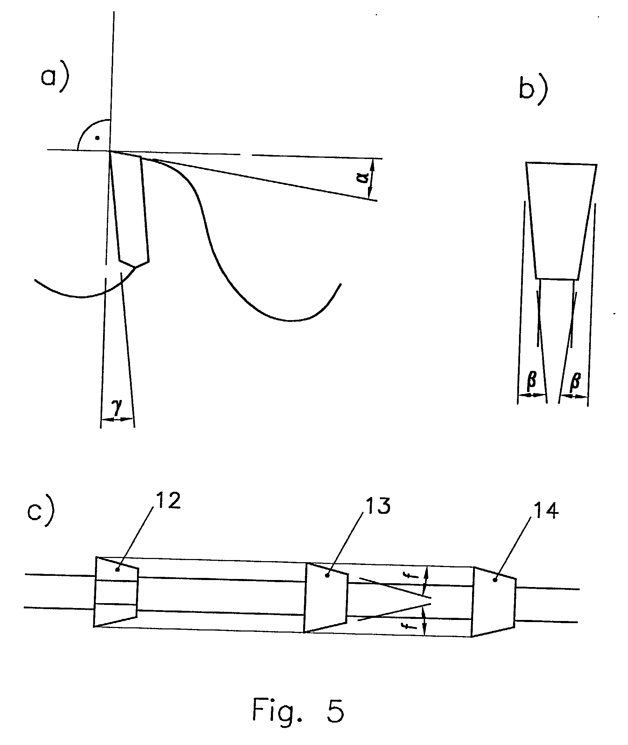

Alle Schneidezähne 12, 13, 14, 13', 14', 13", 14" weisen außerdem die in Fig. 5 gezeigten Spanwinkel γ zwischen 5° und 30°, einen Rückenfreiwinkel α zwischen 10° und 20° (Fig. 5a), einen Radialwinkel β zwischen 0° und 3° (Fig. 5b) und einen Tangentialwinkel f von 1° bis 7° (Fig. 5c) auf.

## Patentansprüche

1. Scheibenförmiges Werkzeug, insbesondere Kreissägeblatt, mit an seinem Umfang angeordneten Schneidezähnen (11, 12, 13; 13', 14'; 13'', 14''), **dadurch gekennzeichnet, dass** die Schneidezähne (12, 13, 14; 13', 14'; 13'', 14'') in Gruppen (11) unterteilt sind, wobei jeweils der in Schneiderichtung (15) erste Zahn (12) einer Gruppe (11) mit seiner Schneide radial weiter nach außen ragt als der oder die Folgezähne (13, 14; 13', 14'; 13", 14") der Gruppe (11).

2. Werkzeug nach Anspruch 1, **dadurch gekennzeichnet, dass** eine Gruppe (11) von vorzugsweise drei oder mehr Schneidezähnen (12, 13, 14) gebildet wird.

3. Werkzeug nach Anspruch 1 oder 2, **dadurch gekennzeichnet, dass** der erste Schneidezahn (12) einer Gruppe um 0,3 bis 0,8 mm radial über den oder die nachfolgenden Schneidezähne (13, 14; 13', 14'; 13", 14") nach außen vorsteht.

4. Werkzeug nach einem der Ansprüche 1 bis 3, **dadurch gekennzeichnet, dass** bei Gruppen (11) mit mehreren Folgezähnen (13, 14; 13', 14'; 13'', 14'') die Folgezähne (13, 14; 13'', 14'') alle radial gleich oder unterschiedlich weit nach außen vorstehen.

5. Werkzeug nach einem der Ansprüche 1 bis 4, **dadurch gekennzeichnet, dass** der erste Schneidezahn (12) einer Gruppe (11) eine im Längsschnitt trapezförmige Schneide mit seitlichen Fasen (12.1) aufweist.

6. Werkzeug nach Anspruch 5, **dadurch gekennzeichnet, dass** die Fasen (12.1) mit der Scheibenebene des Werkzeugs (10) einen Winkel (δ) von 30° bis 60° einschließen.

7. Werkzeug nach Anspruch 5 oder 6, **dadurch gekennzeichnet, dass** die Breite der Fasen (12.1) zwischen 1/4 und 3/4 der Schnittbreite (B) des Werkzeugs (10) beträgt.

8. Werkzeug nach einem der Ansprüche 1 bis 7, **dadurch gekennzeichnet, dass** die Schneiden des oder der Folgezähne (13, 14; 13', 14'; 13'', 14'') ebenfalls ein- oder beidseitig mit Fasen (13.1, 14.1) versehen sind.

9. Werkzeug nach Anspruch 8, **dadurch gekennzeichnet, dass** die Fasen (13.1, 14.1) der Folgezähne (13, 14; 13', 14'; 13", 14") mit der Scheibenebene des Werkzeugs (10) einen Winkel (∈) von 30° bis 60° einschließen.

10. Werkzeug nach Anspruch 8 oder 9, **dadurch gekennzeichnet, dass** die Breite der Fasen (13.1, 14.1) an den Schneiden der Folgezähne (13, 14; 13', 14'; 13", 14") zwischen 1/25 und 1/5 der Schnittbreite (B) des Werkzeugs (10) beträgt.

11. Werkzeug nach einem der Ansprüche 1 bis 10, **dadurch gekennzeichnet, dass** alle Schneidezähne (12, 13, 14; 13', 14'; 13'', 14'') einen Spanwinkel (γ) von 5° bis 30° aufweisen.

12. Werkzeug nach einem der Ansprüche 1 bis 11, **dadurch gekennzeichnet, dass** alle Schneidezähne (12, 13, 14; 13', 14'; 13'', 14'') einen Rückenfreiwinkel (α) von 10° bis 20° aufweisen.

13. Werkzeug nach einem der Ansprüche 1 bis 12, **dadurch gekennzeichnet, dass** alle Schneidezähne (12, 13, 14; 13', 14'; 13", 14") einen Tangentialwinkel (f) von 1° bis 7° aufweisen.

14. Werkzeug nach einem der Ansprüche 1 bis 13, **dadurch gekennzeichnet, dass** alle Schneidezähne (12, 13, 14; 13', 14'; 13", 14") einen Radialwinkel (β) von 0° bis 3° aufweisen.
